**Europäisches Patentamt**

**European Patent Office**

**Office européen des brevets**

(19)

(11) Veröffentlichungsnummer : **0 059 839**
**B1**

(12) **EUROPÄISCHE PATENTSCHRIFT**

(45) Veröffentlichungstag der Patentschrift :
19.12.84

(21) Anmeldenummer : 82100759.8

(22) Anmeldetag : 03.02.82

(51) Int. Cl.³ : **D 01 G 23/08, D 01 G 15/82**

(54) Vorrichtung zum Ausscheiden von Fasermaterial.

(30) Priorität : 06.03.81 CH 1517/81

(43) Veröffentlichungstag der Anmeldung :
15.09.82 Patentblatt 82/37

(45) Bekanntmachung des Hinweises auf die Patenterteilung : 19.12.84 Patentblatt 84/51

(84) Benannte Vertragsstaaten :
**AT CH DE FR GB IT LI NL**

(56) Entgegenhaltungen :
**DE-C- 229 596**
**FR-A- 2 289 643**
**GB-A- 748 098**
**GB-A- 930 930**
**GB-A- 1 383 375**

(73) Patentinhaber : **MASCHINENFABRIK RIETER A.G.**
**Postfach 290**
**CH-8406 Winterthur (CH)**

(72) Erfinder : **Würmli, Arthur**
**Landvogt-Waser-Strasse 93**
**CH-8405 Winterthur (CH)**

## Beschreibung

Die vorliegende Erfindung bezieht sich auf eine Vorrichtung zum Ausscheiden von Fasermaterial aus einem Luftstrom eines pneumatischen Transportsystems.

Es ist in der Textilindustrie bekannt, bei Arbeitsvorgängen mit Fasermaterial frei herumfliegende Fasern oder aus dem normalen Arbeitsprozess ausgeschiedene Fäden mit einem Luftstrom zu erfassen und anschliessend wieder aus dem Luftstrom auszuscheiden und zu sammeln. Bei bekannten Verfahren, z. B. gemäss dem schweizerischen Patent Nr. 262 239 oder der japanischen Gebrauchsmuster-Veröffentlichung Nr. 51-53 287, werden die Fasern aus einen Bewegten Luftstrom, durch den sie erfasst und transportiert werden, durch Auffangen auf der äusseren Oberfläche einer Siebtrommel mit einem in deren Innerem vorhandenen Unterdruck wieder ausgeschieden. Anschliessend werden die Fasern mittels einer eine Unterdruck-Abschirmung und eine Rolle umfassenden Anordung wieder von der Siebstrommeloberfläche entfernt.

Bei solchen bekannten Einrichtungen weist das auf der Oberfläche der Trommel angesammelte und von dieser als Faserwatte abgelöste Fasermaterial in seiner Dichte Ungleichmässigkeiten auf. Es bilden sich bei nicht einwandfreiem Ablösen der Fasern von der Trommel an engen Stellen an derselben Verstopfungen, wodurch Beschädigungen auftreten können. Als Folge der zwischen verstopften Stellen und der rotierenden Trommel vorhandenen Reibung entsteht ausserdem Wärme, wodurch sich das Fasermaterial unter Umständen entzünden kann, was aus offensichtlichen Gründen in einem Textilbetrieb verheerende Folgen nach sich zieht.

Gemäss vorliegender Erfindung sollen diese Nachteile vermieden werden. Diese ist gekennzeichnet durch die Kombination

— einer rotierbaren Siebtrommel, in deren Innerem, im Betrieb der Vorrichtung, ein Unterdruck vorhanden ist, und welche einen siebförmigen Mantel besitzt, auf welchen das Transportsystem mündet,

— eines an einem Faserablösebereich die Innenfläche des Mantels abdeckenden Schirmes,

— eines sich unterhalb das Faserablösebereichs befindenden Behälters zur Aufnahme der vom Faserblösebereich abgelösten, in den Behälter absinkenden Faserwatte,

— eines vom Behälter weg zu einer Austrittsöffnung führenden Abführungskanals und eines intermittierend arbeitenden Stössels, welcher vorgesehen ist, im Behälter angesammelte Faserwatte aus diesem und in den Abführungskanal hinein fortzuschieben,

— und ist ausserdem gekennzeichnet durch einen Abstand des Faserablösebereichs vom Boden des Behälters, welcher nicht grösser ist als diejenige Länge der absinkenden Faserwatte, bei welcher im Betrieb der Vorrichtung ein Zerreissen derselben gerade noch vermieden ist.

Die Erfindung geht von der Erkenntnis aus, dass bei bekannten Einrichtungen, als Folge von Stellen verschiedener Dichte der von der Manteloberfläche der Siebtrommel abgelösten Faserwatte, der Fall eintreten kann, dass die in einen Sammelbehälter absinkende Faserwatte reisst. Dies wiederum kann bewirken, dass sich Fasern nicht mehr vollständing von der rotierenden Trommel lösen, an dieser hängen bleiben und mitgenommen werden. Dies führt zu den erwähnten Verstopfungen.

Gemäss dieser Erfindung soll das Zerreissen der Faserwatte vermieden werden. Die letztere bewegt sich nach deren Ablösen von der Siebtrommel durch ihr Eigengewicht in einen sich unterhalb des Faserablösebereichs befindenden Behälter und wird in diesem gesammelt. Je weiter der Behälter vom Faserablösebereicht entfernt oder je tiefer er ist, um so länger und damit um so schwerer wird die absinkende Faserwatte. Erfindungsgemäss wird die Entfernung des Bodens des Behälters vom Faserablösebereich, d. h. die Länge der in den Behälter absinkenden Faserwatte, so bemessen, dass das Gewicht der Watte bzw. deren Länge nicht grösser ist als der Wert, bei welchem ein Zerreissen der Faserwatte gerade noch vermieden wird. Dieser Wert ist vom Fasermaterial abhängig, beispielsweise von der Faserlänge, von der Grösse der Unterschiede in der Dichte der Faserwatte, von der Rotationsgeschwindigkeit der Siebtrommel und von der Menge des Fluganfalls.

Beim Arbeiten mit einer begrenzten Länge der absinkenden Faserwatte kann der Behälter nicht beliebig tief sein. Da sich ein solcher unter gewissen Umständen relativ rasch füllt, wird dieser gemäss der Erfindung mittels eines intermittierend arbeitenden Stössels über einen Abführungskanal geleert. Das Vorsehen des Stössels ergibt nun aber den folgenden, weiteren Vorteil : Es gibt Fälle, wo die Raumverhältnisse knapp sind. Bei solchen kann wegen des Vorhandenseins des intermittierend arbeitenden Stössels der Abstand des Behälters vom Ablösebereich und/oder der Behälter selbst kleiner sein als dies die erfindungsgemässe Forderung des Nicht-Zerreissens der Faserwatte verlangt. Die Erfindung verschafft somit die Möglichkeit einer Raumersparnis beim Behälter oder Füllschacht für die Faserwatte.

In einer speziellen Ausführungsform der Erfindung verengt sich der Abführungskanal in der Richtung vom Behälter weg gegen die Austrittsöffnung hin, so dass sich beim Wegschaffen der Faserwatte durch den Abführungskanal in diesem gleichzeitig eine Verdichtung der Faserwatte ergibt. Man erhalt bei dieser Ausführungsform als zusätzlichen Vorteil auch eine Raumersparnis beim Sammelgefäss für das abgeführte und wieder gesammelte Fasermaterial im Vergleich zu Anordnungen, bei denen diese Gefässe relativ gross gewählt sind, um das Entleeren derselben nicht in unpraktisch kurzen Zeitabständen durchführen zu müssen.

Diese Ausführungsform ist zusätzlich von wesentlicher Bedeutung, wenn die erfindungsgemässe Vorrichtung zusammen mit einem Transportsystem von grosser Ausdehnung, z. B. einem sich über die gesamte Länge einer Spinnmaschine erstreckenden Transportsystem, verwendet wird. Um bei einem solchen den gesamten Faserflug mit Sicherheit zu erfassen, muss ein genügend starker Luftstrom, d. h. es muss im Inneren der Siebstrommel ein relativ grosser Unterdruck vorhanden sein. Um zu vermeiden, dass in solchen Fällen in der Umgebung der Einmündung des Transportsystems in die Siebtrommel grosse Mengen leckartiger Luftströme in diese eindringen, werden in einer Weiterbildung der Erfindung die Siebtrommel und der Behälter in eine Kammer eingeschlossen, in welcher ein Unterdruck vorhanden ist, welcher kleiner ist als derjenige in der Trommel, welcher aber bewirkt, dass die erwähnten, leckartigen Luftströme auf ein annehmbares Mass reduziert sind. Bei dieser erfindungsgemässen Weiterbildung ist die im Vorherigen erwähnte Verdichtung der Faserwatte im Abführungskanal von ganz besonderem Vorteil. Diese verhindert nämlich, dass die Aussenluft durch den Abführungskanal, der ja ins Freie führen muss, in die Kammer hinein strömen kann. Die verdichtete Faserwatte dichtet somit den Kanal und das Innere der Kammer gegen von aussen durch den Abführungskanal einfliessende Luft ab.

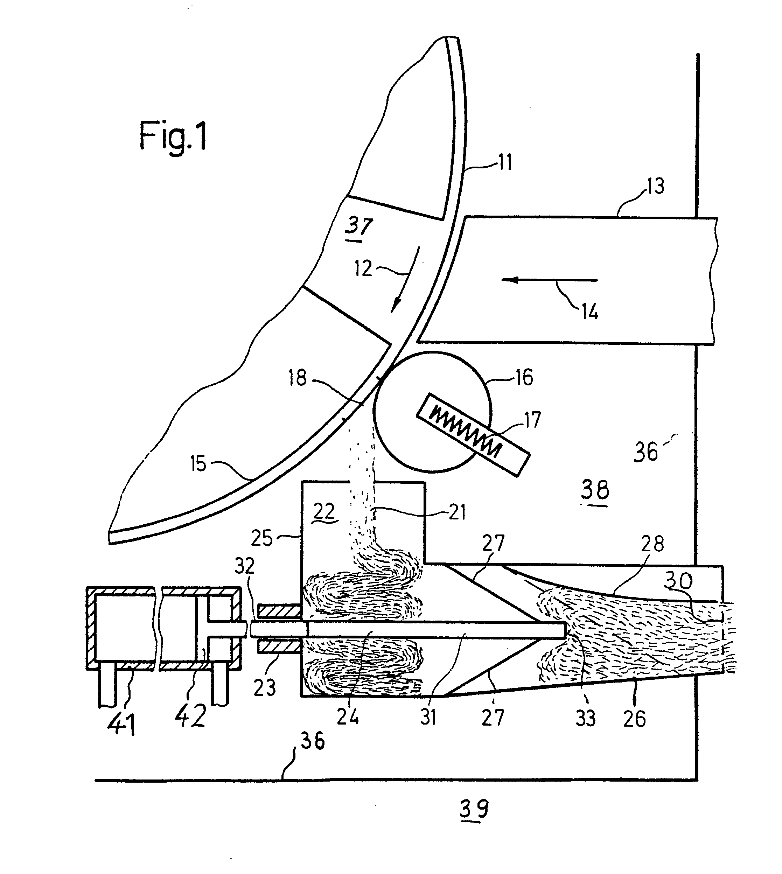

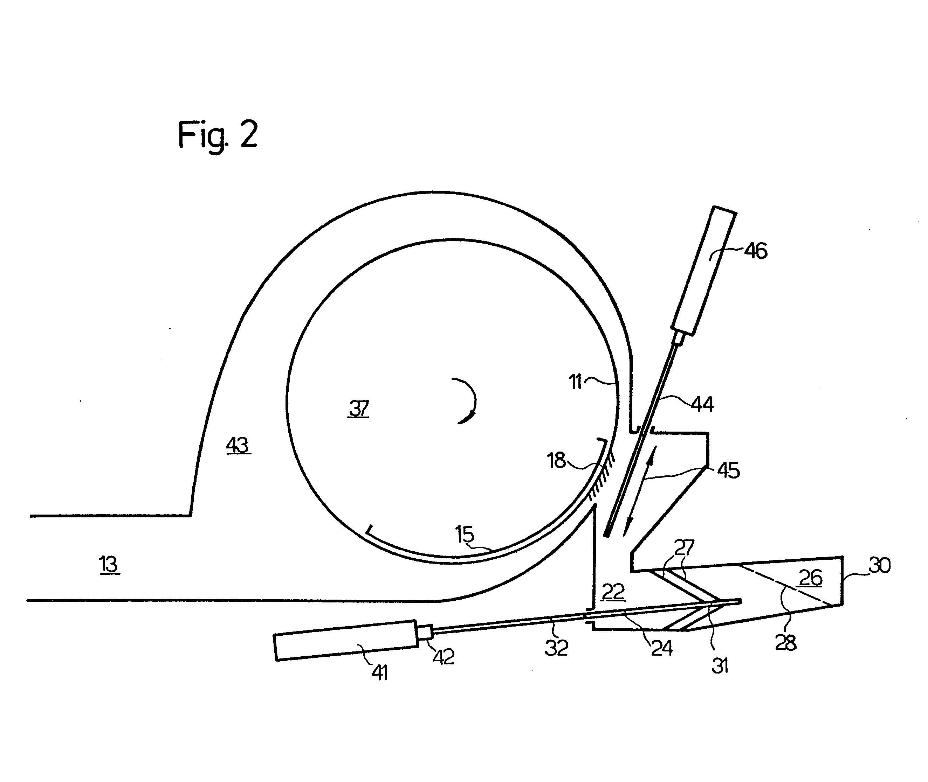

Die Erfindung sei nun anhand von Ausführungsbeispielen und den Zeichnungen näher erläutert. In der letzteren sind die Figur 1 und die Figur 2 Seitenansichten von Beispielen der erfindungsgemässen Vorrichtung.

Die Fig. 1 zeigt eine Trommel mit einem mit Oeffnungen durchsetzten, siebförmigen Mantel 11, welcher in der Richtung des Pfeiles 12 drehbar ist. Im Inneren der Trommel 37 ist ein reduzierter Luftdruck vorhanden. Ein pneumatisches Transportsystem 13 mündet auf den Mantel 11 und der einmündende Endteil ist formmässig der Krümmung des Mantels 11 angepasst. Im Transportsystem 13 fliesst in Richtung des Pfeiles 14 eine Luftströmung. Durch diese wird Fasermaterial, wie z. B. einzelne Fasern oder Fadenstücke, gefördert. Im Inneren der Trommel 37 befindet sich ein mit kleinem Abstand zum Mantel 11 verlaufender Schirm 15. Er dient zum Abschirmen des Unterdrucks und kann sich je nach den Umständen über einen mehr oder weniger grossen Bereich des Mantelumfangs erstrecken.

Unmittelbar anschliessend an das Transportsystem 13, und dem Schirm 15 in bezug auf den Mantel 11 gegenüberliegend, befindet sich eine Rolle 16, welche mittels einer Feder 17 gegen den Mantel 11 gedrückt wird und das Ablösen des Fasermaterials vom Mantel 11 unterstützt. Es wird angestrebt, zwischen dem Transportsystem 13 und der Rolle 16 möglichst wenig Luft durchfliessen zu lassen. In einem Ablösebereich 18, dessen ungefähre Breitenerstreckung durch zwei Markierungen angegeben ist, lösen sich im Betrieb die Fasern vom Mantel 11 ab.

Die abgelösten Fasern bilden eine Faserwatte 21, welche in einem Behälter 22 gesammelt wird. Eine mit dem Behälter 22 feste Führung 23 dient zum Führen eines in horizontaler Richtung beweglichen Stössels 24. Dieser kann beispielsweise pneumatisch mittels eines in einem Arbeitszylinder 41 bewegbaren Kolbens 42 angetrieben sein. Er ist in der Fig. 1 in seiner vordersten Stellung gezeichnet und kann zurückbewegt werden, bis sich die Stirnfläche 33 auf der Höhe der Wand 25 befindet. Der Behälter 22 ist gegen einen Abführungskanal 26 hin offen. Im Inneren des Abführungskanals 26 sind zwei Zurückhalteklappen 27 angebracht, welche federnd gegeneinander bzw. gegen den nach vorn gestossenen Stössel 24 anliegen. Zudem ist noch eine Verschlussklappe 28 vorhanden. Diese ist ebenfalls elastisch. In ihrer Schliessstellung nimmt sie die gestrichelt gezeichnete Lage ein. In der Richtung vom Behälter 22 weg und gegen eine Austrittsöffnung 30 hin verengt sich der Abführungskanal 26. Der Stössel 24 besteht aus einem Kopfteil 31 und einer Stossstange 32. Der flächenförmige Kopfteil 31 erstreckt sich in horizontaler, zur Stossrichtung senkrechter Richtung (senkrecht zur Zeichenebene) über den Innenraum des Behälters 22.

Wenn sich die gezeigte Vorrichtung in Betrieb befindet, wird durch den als Folge des Unterdrucks in der Siebtrommel 37 erzeugten Luftstrom des pneumatischen Transportsystems 13 Fasermaterial oder Flug in Richtung des Pfeiles 14 gegen den Mantel 11 gefördert. Als Folge des im Inneren der Trommel 37 vorhandenen Unterdrucks strömt der Luftstrom ins Innere derselben und bleiben die Fasern auf der äusseren Oberfläche des siebförmigen Mantels 11 haften. Sobald sich die Fasern auf dem sich drehenden Mantel 11 auf der Höhe des Schirms 15 befinden, hört die Saugwirkung auf, so dass sich das Fasermaterial im Ablösebereich 18 vom Mantel 11 loslöst. Es bewegt sich als eine sich über die **Breite der Trommel, d. h. senkrecht zur Zeichenebene, erstreckende Faserwatte 21 als Folge sei**nes Gewichtes nach unten und sammelt sich im Behälter 22 an.

Im Normalzustand befindet sich der Stössel 24 in seiner hinteren, in der Figur 1 linken Stellung, in welcher die Stirnfläche 33 mit der Wand 25 fluchtet. Nach einiger Zeit, während der sich der Behälter 22 um einen gewissen Betrag gefüllt hat, wird der Stössel 24 in seine vordere, in die in Figur 1 gezeichnete Endstellung bewegt. Dabei schiebt der Kopfteil 31 die angesammelte Faserwatte vor sich hin und an den Zurückhalteklappen 27 vorbei in den Abführungskanal 26 hinein. Daraufhin wird der Stössel 24 wieder in seine Ausgangslage zurückbewegt.

Die Klappen 27 verhindern, dass bei dieser Rückbewegung sich die Faserwatte wieder zurückbewegt. Nachdem der Stössel 24 wiederum für einige Zeit in seiner Ausgangslage verblieben ist, führt er wiederum eine Stossbewegung aus *und schiebt wiederum eine gewisse Menge im* Behälter 22 angesammelter Faserwatte in den Abführungskanal 26 hinein. Dadurch wird die beim ersten Stossvorgang in den Kanal 26 geschobene Faserwatte 21 weiter gegen dessen Austrittsöffnung 30 geschoben.

Nachdem der Stössel 24 wiederholt Faserwatte in den Kanal 26 geschoben hat, ist die Verschlussklappe 28 in die als ausgezogene Linie gezeichnete Lage gedrückt worden. Als Folge sowohl der Elastizität der Klappe 28 als auch der sich nach der Austrittsöffnung 30 des Abführungskanals 26 hin verengenden Form des letzteren, wird die Faserwatte beim Durchgang durch den Abführungskanal 26 verdichtet, wobei auch die Zurückhalteklappen 27 bis zu einem gewissen Grad eine solch verdichtende Wirkung ausüben. Das nicht gezeichnete Sammelgefäss, in welches das Fasermaterial nach Verlassen des Kanal 26 gelangt, kann somit eine viel grössere Menge solchen Materials aufnehmen, als dies ohne Komprimieren der Fall wäre.

Es ist bereits bekannt, die sich vom Ablösebereich 18 herunterbewegende Faserwatte 21 in einem Behälter zu sammeln. Weil diese Faserwatte 21 sich in einem sehr lockeren Zustand befindet, muss ein solcher Behälter sehr gross sein und oft geleert werden. Ein grosser Behälter bedingt jedoch auch einen grossen Abstand zwischen dem Ablösebereich 18 und dem Behälter, bzw. dessen Boden. Unter solchen Umständen sind die Bedingungen für ein Zerreissen der Faserwatte 21 mit den eingangs beschriebenen Nachteilen gegeben. Wie eingangs erwähnt, wird gemäss dieser Erfindung die Entfernung des Behälters 22 bzw. der Bodens desselben vom Ablösebereich 18, d. h. die Länge der absinkenden Faserwatte 21 in der Weise bemessen, dass ein Zerreissen der Faserwatte 21 nicht eintritt und mindestens gerade vermieden wird. Damit ist ein zuverlässiges und sauberes Ablösen der Fasern vom Mantel 11 jederzeit gewährleistet.

Es ist daher ersichtlich, dass sich in vielen Fällen der Behälter 22 vorteilhafterweise mit seinem oberen Ende auf einer Seite (Wand 25) möglichst nahe zum Mantel 11 und auf der gegenüberliegenden Seite unmittelbar bis zur Rolle 16 erstreckt. Es ist ebenfalls vorteilhaft, wenn sich der Stössel 24 quer zur Fallrichtung der Watte 21 oder mindestens ungefähr horizontal bewegt, wobei die Bewegungsbahn des Stössels 24 in unmittelbarer Nähe der Trommel 37 bzw. des Mantels 11 verläuft.

Fig. 2 zeigt eine Ausführungsform, bei welcher an Stelle der Rolle 16 eine Schieberanordnung vorgesehen ist. Diese Figur zeigt wiederum eine Siebtrommel 37 mit einem siebförmigen Mantel 11, ein auf diesen einmündendes, pneumatisches Transportsystem 13, einen Schirm 15, einen Faserablösebereich 18, einen Behälter 22, einen Abführungskanal 26 mit Klappen 27 und 28 und einer Austrittsöffnung 30 und einen Stössel 24, welcher einen Kopfteil 31 und eine Stossstange 32 umfasst. Der Antrieb des Stössels 24 erfolgt mittels eines Zylinders 41, in welchem ein *Kolben 42 hydraulisch oder pneumatisch hin und* her bewegt werden kann. Die Trommel 37 mit dem Mantel 11 befindet sich im Innern einer Kammer 43, welche die Siebtrommel 37 und den Behälter 22 umfasst.

Es sind ein bis zwei Schieber 44 vorgesehen, welche in der Richtung des Doppelpfeiles 45 zueinander gegenläufig bewegbar sind. In der Figur 2 ist der eine Schieber 44 sichtbar und durch diesen der zweite Schieber 44 verdeckt. Die Schieber 44 werden durch einen in einem Arbeitszylinder 46 bewegbaren Kolben 42 angetrieben. Sie dienen dazu, das Fasermaterial nach unten in den Behälter 22 zu fördern.

Gemäss dem Beispiel der Fig. 2 wird im Betrieb der Vorrichtung das sich im Faserablösebereich 18 vom Mantel 11 ablösende Fasermaterial mittels der Schieber 44 in den Behälter 22 hineingefördert. Dabei bewegen sich die Schieber 44 höchstens mit der Geschwindigkeit der sich absenkenden Fasern. Die Schieber 44 bewirken auch bei einer Bewegung, welche langsamer ist als diejenige der sich absenkenden Faserwatte, ein Wegziehen der Fasermaterials vom Mantel 11, falls dieses unerwünschterweise aus irgendeinem Grunde am Mantel 11 haften bleiben sollte. Durch das Vorsehen dieser Schieber 44 sind somit die eingangs erwähnten gefährlichen Verstopfungen an engen Stellen der Trommel mit grösster Sicherheit vermieden.

In der Einführung wurde bereits erwähnt, dass bei einem ausgedehnten Transportsystem 13 im Innern der Siebtrommel 37 ein relativ grosser Unterdruck vorhanden sein muss. Um die zwischen der Mündungsstelle des Transportsystems 13 und dem Mantel 11 leckartig ins Innere der Siebtrommel 37 fliessende Luft auf ein annehmbares Mass zu reduzieren, werden in einer weiteren Ausführungsform, wie in Fig. 1 gezeigt, die Siebtrommel 37 und der Behälter 22 in eine Kammer 38 eingeschlossen, von welcher in der Figur 1 die Wände 36 gezeichnet sind. Im Betrieb der Ausscheidevorrichtung ist der Luftdruck im Innern der Kammer 38 kleiner als der Druck in der Umgebung 39 ausserhalb der Kammer 38, aber grösser als der Druck im Innern der Siebtrommel 37. Dabei wird durch die Verschlussklappe 28 verhindert, dass merkliche Mengen Luft durch den Abführungskanal 26 von aussen in die von den Wänden 36 begrenzte Kammer eindringen. Zu diesem Zweck liegt die Klappe 28, so lange keine Faserwatte 21 im Kanal 26 vorhanden ist, allseitig an den Innenwänden des Abführungskanals 26 an. Beim Vorhanden- ein von Faserwatte 21 wird diese, wie bereits ausgeführt wurde, zusammengepresst und dadurch das Eindringen von Luft durch den Kanal 26 praktisch unterbunden. Durch diese Massnahmen wird das Erstellen eines Unterdrucks in der Kammer 38 sehr erleichtert. Es dürfte offensichtlich sein, dass bei einem sich nur in seinem Querschnitt verengenden Abführungskanal 26 ohne Verschlussklappe 28 bereits ein genügendes Verdichten der Faserwatte erzielt werden kann, um im Innern der durch die Wände 36 begrenzten Kammer einen genügend grossen Unterdruck zu errichten. Entsprechend weist im Beispiel der Fig. 2 der Luftdruck innerhalb der Kammer 43 einen Wert auf, welcher zwischen dem Aussendruck und dem Druck innerhalb der Siebtrommel 37 liegt. Somit liegt beim Beispiel der Fig. 2 ein den soeben beschriebenen Verhältnissen vollständig analoger Sachverhalt vor.

**Ansprüche**

1. Vorrichtung zum Ausscheiden von Fasermaterial aus einem Luftstrom eines pneumatischen Transportsystems, gekennzeichnet durch die Kombination

— einer rotierbaren Siebtrommel (37), in deren Innerem, im Betrieb der Vorrichtung, ein Unterdruck vorhanden ist, und welche einen siebförmigen Mantel (11) besitzt, auf welchen das Transportsystem (13) mündet,

— eines an einem Faserblösebereich (18) die Innenfläche des Mantels (11) abdeckenden Schirmes (15),

— eines sich unterhalb des Faserablösebereichs (18) befindenden Behälters (22) zur Aufnahme der vom Faserablösebereich (18) abgelösten, in den Behälter (22) absinkenden Faserwatte (21),

— eines vom Behälter (22) weg zu einer Austrittsöffnung (30) führenden Abführungskanals (26) und eines intermittierend arbeitenden Stössels (24), welcher vorgesehen ist, im Behälter (22) angesammelte Faserwatte aus diesem und in den Abführungskanal (26) hinein fortzuschieben,

— und ausserdem gekennzeichnet durch einen Abstand des Faserablösebereichs (18) vom Boden des Behälters (22), welcher nicht grösser ist als diejenige Länge der absinkenden Faserwatte (21), bei welcher in Betrieb der Vorrichtung ein Zerreissen der Faserwatte (21) gerade noch vermieden wird.

2. Vorrichtung nach Anspruch 1, dadurch gekennzeichnet, dass eine Seite (25) des Behälters (22) sich mit ihrem oberen Ende bis unmittelbar zur Trommel (37) hin erstreckt.

3. Vorrichtung nach Anspruch 1, dadurch gekennzeichnet, dass der Stössel (24) in einer Stossbewegung von einer dem Abführungskanal (26) gegenüberliegenden Stelle am Behälter (22) durch den letzteren hindurch in den Abführungskanal (26) hinein und in einer Rückbewegung wieder zurück bewegbar ist.

4. Vorrichtung nach Anspruch 1, dadurch gekennzeichnet, dass sich der Abführungskanal (26) in der Richtung vom Behälter (22) weg gegen die Austrittsöffnung (30) hin verengt.

5. Vorrichtung nach Anspruch 1, dadurch gekennzeichnet, dass der Abführungskanal (26) und die Bewegungsbahn des Stössels (24) mindestens ungefähr horizontal sind und die letztere in unmittelbarer Nähe des Mantels (11) verläuft.

6. Vorrichtung nach Anspruch 1, dadurch gekennzeichnet, dass sich neben dem Ablösebereich (18) und ausserhalb des Mantels (11) mindestens ein Schieber (44) befindet, welcher in die Bahn der absinkenden Faserwatte (21) hinein und gegen den Boden des Behälters (22) hin und wieder zurück bewegbar ist.

7. Vorrichtung nach Anspruch 2, dadurch gekennzeichnet, dass am Ablösebereich (18) und auf der Aussenseite des Mantels (11) eine an dem letzteren anliegende Rolle (16) vorgesehen ist, und dass sich die andere Seite des Behälters (22) von unten her bis unmittelbar zur Rolle (16) hin erstreckt.

8. Vorrichtung nach Anspruch 1, dadurch gekennzeichnet, dass im Abführungskanal (26) eine Verschlussklappe (28) vorgesehen ist, welche sich in ihrer Schliessstellung von einer Befestigungsstelle weg gegen die Austrittsöffnung (30) hin schräg zum Abführungskanal (26) über diesen erstreckt und gegen in diesem befindliche Faserwatte elastisch vorgespannt ist.

9. Vorrichtung nach Anspruch 3, dadurch gekennzeichnet, dass im Abführungskanal (26) Zurückhalteklappen (27) vorgesehen sind, welche sich von je einer Befestigungsstelle weg gegen die Austrittsöffnung (30) hin schräg zum Abführungskanal (26) gegen die Mitte des Kanals (26) erstrecken und bei gestossenem Stössel (24) elastisch gegen diesen vorgespannt sind.

10. Vorrichtung nach Anspruch 3, dadurch gekennzeichnet, dass der Stössel (24) einen an einer Stossstange (32) befestigten, flächenförmigen Kopfteil (31) aufweist, welcher sich in horizontaler, zur Stossrichtung senkrechter Richtung über den Innenraum des Behälters (22) erstreckt.

11. Vorrichtung nach Anspruch 4, dadurch gekennzeichnet, dass die Siebtrommel (37) und der Behälter (22) von einer Kammer (38, 43) umgeben sind, in deren Innerem im Betrieb der Vorrichtung ein Unterdruck vorhanden ist, dessen Wert zwischen demjenigen im Inneren der Siebtrommel und dem Aussendruck liegt.

12. Vorrichtung nach den Ansprüchen 8 und 11, dadurch gekennzeichnet, dass die Verschlussklappe (28) bei leerem Abführungskanal (26) allseitig an dessen Innenfläche anliegt.

**Claims**

1. Device for separating fibre material from an air stream of a pneumatic transport system characterised by the combination of

— a rotable perforated drum (37) in the interior of which an underpressure in present in operation of the device and which has a perforated envelope (11) onto which the transport system (13) opens,

— a screen (15) covering the internal surface of the envelope (11) in a fibre separating region (18),

— a receiver (22) located beneath the fibre separating region (18) for receiving the fibre web (21) discharged from the fibre separating region (18) falling into the receiver (22),

— a discharge duct (26) leading away from the receiver (22) to an exit opening (30) and an intermittently operating plunger (24) which is provided to push fibre weg collected in the receiver (22) out of the receiver and into the discharge duct (26),

— and furthermore characterised by a spacing of the fibre separating region (18) from the floor of the receiver (22) not larger than the length of the falling fibre weg (21), by means of which in operation of the device tearing of the fibre weg (21) is just avoided.

2. Device according to claim 1, characterised in that one side (25) of the receiver (22) extends with its upper end up to immediately adjacent the drum (37).

3. Device according to claim 1, characterised in that the plunger (24) is movable in a push movement from a position opposite the discharge duct (26) and at the receiver through the latter into the discharge duct (26) and back again in a return movement.

4. Device according to claim 1, characterised in that the discharge duct (26) narrows in the direction from the receiver (22) towards the exit opening (30).

5. Device according to claim 1, characterised in that the discharge duct (26) and the path of movement of the plunger (24) are at least approximately horizontal and the latter extends in the immediate neighbourhood of the enveloppe (11).

6. Device according to claim 1, characterised in that near the separation region (18) and outside the envelope (11) at least one pusher (44) is provided, which is movable to and fro into the path of the falling fibre weg (21) and back towards the floor of the receiver (22).

7. Device according to claim 2, characterised in that at the separation region (18) and on the exterior of the envelope (11) a roller (16) is provided engaging the envelope, and in that the other side of the receiver (22) extends from below to immediately adjacent the roller (16).

8. Device according to claim 1, characterised in that a closure flap (28) is provided in the discharge duct (26), the flap extending in its closure position away from a mounting location towards the exit opening (3) at an inclination to and across the discharge duct (26) and being resiliently biased towards the fibre web located in the duct.

9. Device according to claim 3, characterised in that retaining flaps (27) provided in the discharge duct (26), the retaining flaps extending away from respective mounting locations towards the exit opening (30) towards the middle of the discharge duct (26) and at an inclination thereto, the flaps being resiliently biased towards the plunger (24) during pushing thereof.

10. Device according to claim 3, characterised in that the plunger (24) has a plate-like head portion (31) secured to a push rod (32), the head portion extending in a horizontal direction, at right angles to the pushing direction, over the interior of the receiver (22).

11. Device according to claim 4, characterised in that the perforated drum (37) and the receiver (22) are enclosed by a chamber (38, 43) in the interior of which in operation of the device an underpressure is present, the value of which lies between that in the interior of the perforated drum and the exterior pressure.

12. Device according to claims 8 and 11, characterised in that the closure flap (28) rests on all sides against the internal surface of the discharge duct (26) when the latter is empty.

**Revendications**

1. Dispositif pour séparer la matière textile du courant d'air d'un système de transport pneumatique, caractérisé par la combinaison

— d'un tambour perforé (37) pouvant être mis en rotation, à l'intérieur duquel, lors de la marche du dispositif, règne une dépression, et qui possède une enveloppe (11) sous forme de tamis sur lequel débouche le système de transport (13),

— d'un écran (15) qui recouvre la surface intérieure de l'enveloppe (11) dans une zone de détachement de fibres (18),

— d'un récipient (22) qui se trouve en dessous de la zone de détachement de fibres (18) pour récupérer la nappe de fibres (21) détachée de la zone de détachement de fibres (18) et qui tombe dans le récipient (22),

— d'un canal d'extraction (26) qui va du récipient (22) vers une ouverture de sortie (30), et d'un poussoir (24) qui travaille d'une manière intermittente et qui est prévu pour déplacer la nappe de fibres qui s'est rassemblée dans le récipient, depuis ce récipient dans le canal d'extraction (26),

— et il est en outre caractérisé par une distance de la zone de détachement de fibres (18) depuis le fond du récipient (22), qui n'est pas plus grande que la longueur de la nappe de fibres tombante (21), distance par laquelle, en ordre de marche du dispositif, un arrachement de la nappe de fibres (21) est tout juste évité.

2. Dispositif selon la revendication 1, caractérisé par le fait qu'une face (25) du récipient (22) s'étend avec son extrémité supérieure directement près du tambour (37).

3. Dispositif selon la revendication 1, caractérisé par le fait que le poussoir (24) est mobile, avec un mouvement de poussée, d'un endroit opposé au canal d'extraction (26), et situé dans le récipient (22), en passant à travers ce dernier, jusque dans le canal d'extraction (26) et, avec un mouvement de retour, jusqu'à son point de départ.

4. Dispositif selon la revendication 1, caractérisé par le fait que le canal d'extraction (26) se rétrécit dans la direction opposée du récipient (22) vers l'ouverture de sortie (30).

5. Dispositif selon la revendication 1, caractérisé par le fait que le canal d'extraction (26) et le chemin de déplacement du poussoir (24) sont au moins à peu près horizontaux, et que le dernier s'étend dans les environs immédiats de l'enveloppe (11).

6. Dispositif selon la revendication 1, caractérisé par le fait qu'au moins un coulisseau (44) se trouve à côté de la zone de détachement (18) et en dehors de l'enveloppe (11), qui est déplaçable jusque dans le chemin de la nappe de fibres tombante (21) et vers le fond du récipient (22), et jusqu'à son point de départ.

7. Dispositif selon la revendication 2, caractérisé par le fait qu'un rouleau (16) est prévu dans la zone de détachement (18) et à l'extérieur de l'enveloppe (11), et reposant sur celle-ci, et que l'autre face du récipient (22) s'étend depuis le bas jusqu'aux environs immédiats du rouleau (16).

8. Dispositif selon la revendication 1, caractérisé par le fait qu'un clapet de fermeture (28) est prévu dans le canal d'extraction (26) qui, dans sa position de fermeture, s'étend depuis un endroit de fixation vers l'ouverture de sortie (30) en biais, par rapport au canal d'extraction (26), et repose sur celui-ci, et qui est pré-tendu élastiquement contre la nappe de fibres qui se trouve dans le canal.

9. Dispositif selon la revendication 3, caractérisé par le fait que des clapets de retenue (27) sont prévus dans le canal d'extraction (26) qui s'étendent chacun, depuis un endroit de fixation vers l'ouverture de sortie (30), en biais par rapport au canal d'extraction (26) jusqu'au milieu du canal (26), et qui sont pré-tendus élastiquement contre celui-ci, le poussoir (24) étant poussé.

10. Dispositif selon la revendication 3, caractérisé par le fait que le poussoir (24) possède une partie frontale (31), en forme de surface, fixée sur une tige de poussée (32) qui s'étend horizontalement et perpendiculairement au sens de poussée, au-dessus de l'intérieur du récipient (22).

11. Dispositif selon la revendication 4, caractérisé par le fait que le tambour perforé (37) et le récipient (22) sont entourés d'une chambre (38, 43) à l'intérieur de laquelle, lors de la marche du dispositif, règne une dépression dont la valeur se situe entre celle qui règne à l'intérieur du tambour perforé et celle qui règne à l'extérieur.

12. Dispositif selon les revendications 8 et 11, caractérisé par le fait que le clapet de fermeture (28) repose, de tous les côtés, sur la surface intérieure du canal d'extraction (26), lorsque celui-ci est vide.

# Fig.1

Fig. 2